# EUROPEAN PATENT APPLICATION

(11) **EP 1 006 432 A2**
(43) Date of publication of application: **07.06.2000**
(21) Application number: 99309526.4
(22) Date of filing: 29.11.1999
(51) Int. Cl.: G06F 3/12

(54) **Printing system and method**

(30) Priority: 02.12.1998 US 204463; 31.03.1999 US 283133
(71) Applicant: Xerox Corporation, Rochester, New York 14644 (US)
(72) Inventor: Evans IV, Charles H., Manhattan Beach, California 90266 (US)
(74) Representative: Skone James, Robert Edmund

(57) **Abstract**

A printing system produces prints from a print job written in one of a plurality of page description languages with the print job assuming the form of a print job stream. The printing system includes a page description language guesser (700) having a plurality of page description language analyzing units (702-1...702-N) for sampling the print job stream, each analyzing unit outputting an information signal which provides information regarding the print job stream. The guesser (700), which receives the information signals, processes the information signals and outputs a filtered signal which indicates the page description language in which the print job is written. The page description language (PDL) guesser must be able to identify a print job containing text written in any of the supported languages in order to enable multi-language simple text printing. The page description language (PDL) analyzing unit or units determines the position codes of the characters in the text of the data sample of the document and from the position codes determines the encoding method for the characters. If the characters are encoded in one of the supported encoding methods then the guessor sets the value of the PDL on that document to "Simple Text". Thus the PDL guesser can recognize text written in any language which can be expressed using a character set standard that can be encoded in one of the supported encoding methods.

## Description

The present invention relates to a printing system that distributes documents among a plurality of printers in a networked printing system and for interpreting jobs written in a plurality of page description languages for printing with a printing apparatus and, more particularly, to a page description language (PDL) guesser which facilitates the interpretation of a print job written in a page description language by determining the page description language in which the print job is written.

Enterprise print management systems provide the means to control and access various printers and to manage other related information remotely.

There are print servers that use a single document manager based on the protocol of DPA ISO 10175 which streamline document processing and allow for minimization of UMC. Examples of such servers may be found in products made available by Xerox Corporation under the "Document Centre" product name.

The enterprise print service will preferably employ an implementation known as the ISO document processing architecture (DPA) standard as envisioned by ISO/IEC 10175. The DPA print system is based on a two level client-server model. Both print spooler and printer supervisor act as servers.

A print client is a client acting as the user's agent that accepts commands, submits requests to print services, receives responses, generates per-user local job numbers, and remembers for each user where the jobs have been submitted. A print spooler is a server that accepts operations from print clients and schedules print jobs on its printer supervisors.

A printer supervisor accepts requests from clients (print spoolers) to print a job on its physical printer.

A physical printer is an actual piece of hardware that has its own printer supervisor controlling it, either directly or remotely. A queue contains jobs waiting to be printed. When a physical printer finishes or nearly finishes a job, its printer supervisor indicates to the spooler its readiness to accept another print job. The spooler scans the queues that feed the physical printer and a scheduling algorithm selects the next job and assigns that job to that physical printer by submitting the print job to the print supervisor using an ISO DPA Print operation.

A logical printer is the abstract entity that users specify to indicate where their job is to be printed and/or what characteristics their job has. Each logical printer has default attributes that the server supplies for those attributes that neither the user nor his print client has supplied. The spooler may assign a print job to the queue based on the specified logical printer, depending on the scheduling policy as established by its system administrator. In other words, a logical printer feeds one queue; each queue feeds one or more physical printers as established by the system administrator of the spooler.

A page description language (PDL) is a method of describing printed pages in a printer independent format. A PDL establishes as interface between a print driver or client and a print server or printer. No one standard PDL presently exists, and as a result a number of industry standards have emerged. Currently existing PDL standards include PostScript.RTM ("PS"), Hewlett Packard Printer Control Language ("HP-PCL") and Interpress Page Description Language.

The well-known commercially-available PDLs, such as PostScript and HP-PCL, relate mainly to the construction of various typefaces for characters and numerals. There are other conventions for organizing image data independent of any typefaces therein. These "image formats" include TIFF, CALS, as well as those image formats which are associated with facsimile transmission, such as CCITT fax Group 3 and fax Group 4. Image formats are a system of "shorthand" commands which enable raw image data (i.e., a set of binary numbers corresponding to black and white pixels) to be compressed into a more manageable form. To take one basic example, an image format such as TIFF or CALS may include an instruction within a data set corresponding to "print a white line" in lieu of a long string of numbers (such as zeros), each number corresponding to one individual pixel in the white line. In this way, image data may be retained in smaller memory spaces than would be required if every single pixel in an image had its own bit of memory. As used herein, the term "image data" shall apply to image data in either image format or PDL, and an "image data set" shall mean a meaningful quantity of such data, such as data for an image or a connected series of images.

With any PDL or image format, there will inevitably be a step of translation of the PDL or image format data into a form usable by an output device, such as a laser printer. Printing hardware requires an input stream of binary data. Thus, the instructions within the image format, such as to "print a white line," will eventually have to be translated into the actual binary code. This code can then be applied to the modulation of a laser source in a raster output scanner, or applied sequentially to individual ejectors in an ink-jet printer.

A PDL Guesser is a software algorithm that determines the page description language (PDL) or Image Format in which a print job is written by analyzing a sample of the data. The PDL Guesser is essential to an electronic print system since it shall determine if the system can print a specific job that it receives. Once a PDL Guesser in an electronic print system determines the PDL or Image Format of a print job, the print system can determine if it supports the PDL or Image Format.

It is an object of the present invention to provide a new type of PDL guesser for PDL and Image formats which determines the PDL based on the characters of the text of the document.

According to one aspect of the present invention, a printing system produces prints from a print job written in one of a plurality of page description languages with the print job assuming the form of a print job stream. The printing system includes a page description language guesser having a plurality of page description language analyzing units for sampling the print job stream, each analyzing unit outputting an information signal which provides information regarding the print job stream. The guesser, which receives the information signals, processes the information signals and outputs a filtered signal which indicates the page description language in which the print job is written.

The page description language (PDL) guesser must be able to identify a print job containing text written in any of the supported languages in order to enable multi-language simple text printing. The page description language (PDL) analyzing unit or units determines the position codes of the characters in the text of the data sample of the document and from the position codes determines the encoding method for the characters. If the characters are encoded in one of the supported encoding methods then the guesser sets the value of the PDL on that document to "Simple Text". Thus the PDL guesser can recognize text written in any language which can be expressed using a character set standard that can be encoded in one of the supported encoding methods.

An example of a system and method according to the present invention will now be described with reference to the accompanying drawings, in which:-
Figure 1 is a schematic block diagram of the distributed printing system; and,
Figure 2 is a schematic block diagram depicting an arrangement for the page description language (PDL) guesser of Figure 1 to analyze a print job stream and determine the page description language in which the corresponding print job is written.

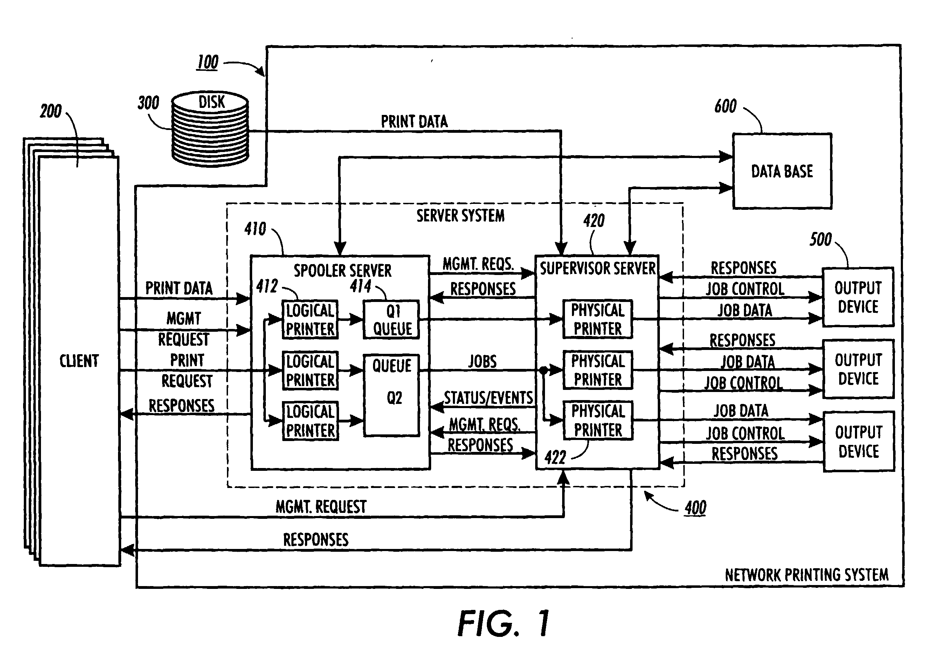

Reference is now made to Figure 1 illustrating the architecture of a client/server distributed printing system 100 of the present invention. The printing system 100 includes one or more clients 200, a general purpose computer system 400, which in this invention is preferably a server system, one or more output devices 500, a disk 300 and an attribute database 600. Each client 200 initiates print requests to print a specified file or files containing print data, and initiates management requests to manage printing systems, such as adding or deleting printers, canceling print requests and the like. The print data can include text or images created by an end user.

The server 400 receives print requests from the clients 200, either directly or via any other source of print requests, such as storage disk 300. The print requests include print data for one or more documents as well as printing instructions, i.e. simplex or duplex printing, stapling or binding, multiple copies, paper size and orientation, etcetera. The server 400 performs actions required for each request operation and returns responses to the corresponding client 200. The server 400 organizes documents into print jobs. A document represents a single user file that is to be printed. A print job represents a collection of one or more documents that are printed as a unit. The print job includes instructions for printing (such as production and finishing), event notification, and response delivery. The server 400 also is responsible for sending job data and associated job control commands to the output device 500.

Each output device 500 is a physical device or hardware that is capable of rendering images, text or documents to produce a hard copy output of the print jobs received from the server 400. Depending on the type of output device 500 and/or the settings of its particular features, each output device 500 returns responses to the server 200 indicating, for example, its current state. Output devices 500 can include, but are not limited to, printers, facsimile machines or pagers. However, as a nonlimiting example, this disclosure refers to the output devices 500 as printers, for simplicity.

In a preferred system, implemented on a general purpose computer, the server functions are split between two different server types, a spooler server 410 and a supervisor server 420. Additionally, such a printing system supports two types of output devices: logical printers 412 (LP1, LP2 and LP3) and physical printers 422 (PP1 and PP2).

In general, a spooler 410 takes print requests from multiple clients 200, converts the print requests into print jobs, schedules print jobs based on the print requests and then forwards the print jobs to a supervisor 420. The supervisor 420 provides the common interface between the spooler 410 and the output devices 500. The supervisor 420 takes the print jobs from the spooler 410 and invokes the designated printer to render the data.

The spooler 410 receives a client print request for a print job that specifies a particular logical printer. The spooler 410 then schedules the print job on an appropriate physical printer 422 associated with the specified logical printer 412. At an appropriate time, the spooler 410 forwards the print job to the supervisor 420 associated with the physical printer 422 on which the spooler 420 scheduled the print job. The spooler 410 can support multiple supervisors 420.

The supervisor server 420 delivers data to one or more of the output devices 500. The supervisor 420 receives the print jobs from the spooler 410, interprets the print jobs for print instructions and parameters, passes the print data, instructions and parameters to the appropriate output device 500, and handles any responses made by the output device 500.

The supervisor 420 receives client management requests that apply to print jobs forwarded to the supervisor, including those print jobs forwarded further to one of the output devices 500. The supervisor 420 also sends management requests to the spooler 410, such as, for example, a request for next job, and status updates, such as "job completed." The supervisor 420 also notifies the spooler 410 of events, such as canceling a print job in response to a "Job Cancel" management request from a user.

A logical printer 412 indicates particular characteristics and capabilities of one or more of it associated physical printers 422. The logical printers 412 are an abstraction of the printer capability of the network printing system 100. Each physical printer 422 represents one actual output device 500 connected to the network printing system 100. Attributes of the logical printers 412 and the physical printers 422 are stored on a database 600 associated with the network printing system 100. The printer attributes correspond to the print job attributes that are extracted from print requests. With regard to the print job, the attributes represent requirements of the print request. With regard to the printers, the attributes represent the print capabilities of the printers.

In a preferred embodiment of this invention, the database 600 resides on the server 400. However, it can be appreciated that the database 600 does not need to reside on the server 400, but can be resident on any device that is accessible by the server 400.

Print jobs are submitted to the logical printers 412 to determine which characteristics are associated with the print job, such as A4 paper, highlight color, and/or stapled output. The spooler 410 channels the print jobs via a queue 414 to the particular supervisor 420 that supports a physical printer 422 that is mapped to a logical printer 412 through the queue 414.

The queue 414 associates a set of print jobs with a set of logical printers 412 and a set of physical printers 414. The one or more queues 414 serve as a holding station for the print jobs until the spooler 410 can send them to the appropriate supervisor 420. Logical printers 412 feed print jobs into the queue 414 and the physical printers 422 request print jobs from the queue.

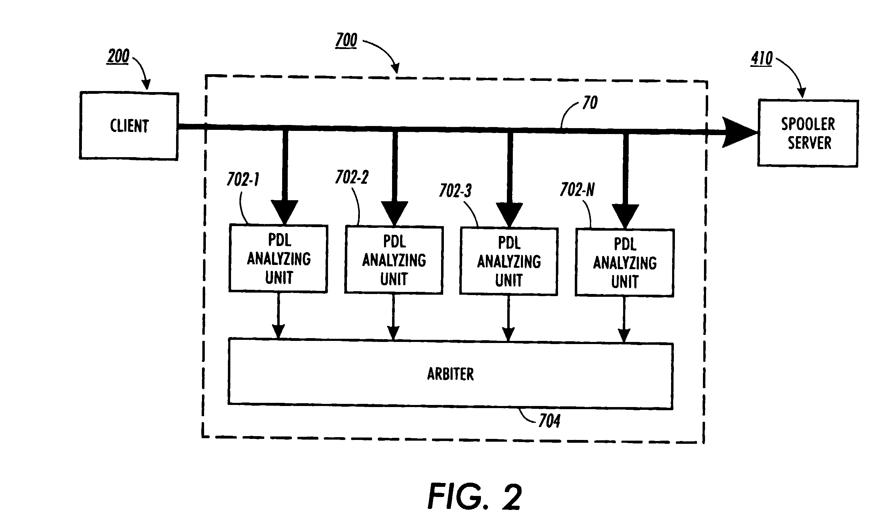

Referring to Figure 2, a PDL guesser 700 determines the PDL of a print job, transmitted from one of the clients 200 to the spooler 410. In the illustrated embodiment of Figure 2, the content of one of the network buses 70, i.e. the content of a print job stream, is scanned by various PDL analyzing units 702-1, 702-2, 702-3, . . . 702-N (hereinafter referred to conjunctively as "PDL analyzing units 702").

As is known, each print job assumes the form of a stream which is expressed in a PDL, the PDL representing image data and instructions for the print job. In the preferred embodiment, each PDL analyzing unit is capable of analyzing one encoding method. However, the PDL guesser with multiple analyzing units can analyze more than one PDL type and a single PDL guesser could be capable of analyzing all the encoding methods to determine the PDL type of the text. Preferably, one of the PDL analyzing units 702 is a binary filter which is used in conjunction with an arbiter, as explained in further detail below. As will be appreciated by those skilled in the art, the PDL analyzing units comprise a modular system and units can be added or deleted in accordance with the demands of the printing system 100.

For convenience of discussion, the PDL determining arrangement is shown with only one of network buses 70, but, in practice, the guesser arrangement 700 would be used with multiple buses. Additionally, the guesser arrangement 700 is shown as a multi-tasking model in which the stream is sampled in parallel, but in other embodiments, the stream could be sampled with a pipeline model, i.e. in sequence, without affecting the concept upon which the disclosed embodiment is based. Finally, while the guesser arrangement 700 is part of the spooler 410, the guesser arrangement 700 could be a service separate from the spooler 410.

In one preferred embodiment, each of the PDL analyzing units is a processor upon which software, suitable for analyzing the print job stream, is implemented. In another embodiment, the PDL analyzing units could be implemented in a multi-tasking system. As the print job stream is analyzed by the units 702, they transmit information signals I.sub.0, I.sub.1, I.sub.2, . . . I.sub.N, respectively, to an arbiter 704.

In one example, the arbiter (or "best guess arbiter") is a logical device or redundancy filter which is adapted to resolve ambiguities and set precedents. The arbiter 704, is preferably implemented with a combination of hardware and software, and is programmable. In the preferred embodiment, the arbiter communicates with various inputs other than the information signals. The primary purpose of the arbiter is to process the information signals from the analyzing units of the guesser for outputting a signal indicating the PDL of the print job stream. As shown in Figure 2, that output signal is transmitted from the arbiter 704 to the spooler 410.

For the purposes of PDL analyzing, a PDL or Image Format is considered to consist only of the defined command operator strings and the specified number of parameters associated therewith. The command operator strings are interspersed with data in a print job. Print jobs containing text are not considered a PDL or Image Format since they do not contain command operator strings and parameters. Although the text is not considered a PDL or Image Format, the PDL Guesser must be able to identify a print job containing text written in any of the supported languages in order to enable multi-language simple text printing.

Text print jobs consists of characters from character set standards that are the printable units that make up the text. A character set is a related collection of characters, used to communicate in a particular language or languages. ISO-646-1991 describes the ASCII (American Standard Code for Information Interchange) character set standard as a set of 94 characters (or 128 characters, counting non-printing characters) for communicating in the English language. There are also ten extended ASCII character sets. These extended ASCII character sets contain the ASCII character set as their common base plus up to an additional 128 characters. These additional characters are used to represent characters in other writing systems such as Arabic, Hebrew, and Cyrillic, as well as accented versions of Roman characters. ISO 8859 Parts one through ten describe the extended ASCII character sets for communicating in the following languages:
- ISO 8859-1:: Danish, Dutch, English, Faeroese, Finnish, French, Germany, Icelandic, Irish, Italian, Norwegian, Portuguese, Spanish and Swedish
- ISO 8859-2:: Albanian, Czech, English, Germany, Hungarian, Polish, Romanian, Serbo-Croatian, Slovak and Slovene
- ISO 8859-3:: Afrikaans, Catalan, Dutch, English, Esperanto, German, Italian, Maltese, Spanish and Turkish
- ISO 8859-4:: Danish, English, Estonian, Finnish, German, Greenlandic, Lappish, Latvian, Lithuanian, Swedish and Norwegian
- ISO 8859-5:: Bulgarian, Byelorussian, English, Macedonian, Russian, Serbo-Croation and Ukrainian
- ISO 8859-6:: Arabic, English
- ISO 8859-7:: Greek, English
- ISO 8859-8:: Hebrew, English
- ISO 8859-9:: Danish, Dutch, English, Finnish, French, German, Irish, Italian, Norwegian, Portuguese, Spanish, Swedish and Turkish
- ISO 8859-10:: Danish, English, Estonian, Finnish, German, Greenlandic, Icelandic, Sami (Lappish), Latvian, Lithuanian, Norwegian, Faeroese and Swedish

There are five commonly used character sets widely used in Japan for communicating in Japanese, and are considered the "national" character sets. They are ASCII (ISO 646-1991), JIS-Roman (part of JIS X 0201-1976), half-width katakana (part of JIS X 0201-1976), JIS X 0208-1990 (and its predecessors JIS C 6226-1978 and JIS X 0208-1983), and JIS X 0212-1990. JIS-Roman is the Japanese equivalent of the ASCII (ISO 646-1991) character set. JIS-Roman and ASCII are different, however, in the following three codes:

| Code | ASCII | JIS-Roman |
|---|---|---|
| 0x5C | backslash | yen symbol |
| 0x7C | broken bar | bar |
| 0x7E | tilde | overbar |

JIS X 0201-1976 enumerates two sets of characters: JIS-Roman and half-width katakana. Half-width katakana consists of 63 characters that provide a minimal set of characters necessary for expressing Japanese. The shapes are compressed and visually occupy a space half that of normal Japanese characters.

JIS X 0280-1990 contains 6,879 characters which includes Roman (JIS-Roman or ASCII), Greek, Cyrillic, Katakana (full-width), Hiragana, JIS Level 1 and JIS Level 2 Kanji characters. This standard was preceded by JIS C 6226-1978 and JIS X 0208-1983 which are older Japanese character sets which were superceded by JIS X 0208-1990. An additional standard, JIS X 0212-1990, defines 6,067 supplemental Japanese characters, along with some additional European characters. The JIS X 0208-1990 and JIS X 0212-1990 character sets are effectively mutually exclusive. A single character set can often support more than one language. The English ISO 6460-1991 and the two Japanese JIS X 0208-1990 and JIS X 0212-1990 character sets all include the ASCII character set.

Encoding is the process of mapping characters from one or more character sets into a set of numerical values. Each character is mapped into a numeric value. All the characters in the character set can be uniquely identified by their associated numeric value. The numeric value assigned to any particular character is called the character's position code. The methods of character encoding allots one computer byte per character whenever possible and two computer bytes per character when necessary. Encoding methods may support text with mixed one- and two-byte characters, multiple character sets, and different versions of the same character set.

Character sets for English and most other Western European languages are fairly easy. The total number of characters used in these languages is relatively small, thus allowing each character to be represented by a unique one-byte code. On the other hand, Japanese requires two-byte codes to represent all of the kanji characters. Every character set has one or more orderings, which can be viewed as a way of assigning a number or set of numbers to each character in the set. For most character sets, there is a standard ordering. ASCII, for example, places letters in their "natural" order, puts uppercase letters before lowercase letters, numbers before letters, etc. For many of the Asian character sets, there is no natural ordering of the characters. The actual orderings are based on one or more salient characteristic, of which there are many to choose from -- e.g. number of strokes, common radicals, phonetic ordering, etc.

Encoding methods fall into one of three possible types: modal encoding, non-modal encoding and fixed-width encoding. Modal encoding methods require escape sequences or special characters for switching between one- and two-byte-per-character modes, different character sets, or different versions of the same character set. The encoding can be in multiple states in a modal encoding. Interpretation of the characters will depend upon the state of the encoding. The Non-modal encoding method make use of the numeric values of a text's bytes for deciding when to switch between one-byte or two-byte or three-byte per-character modes, different character sets, or different versions of the same character set. A fixed-width encoding always uses the same number of bytes per character for all the characters in the character set. There is no switching between one- and two-byte-per-character modes, different character sets, or different versions of the same character set.

ASCII and JIS-Roman are considered different character set standards, but they share the same fixed-width encoding method. The definition of the encoding method for the ASCII character set is found in the document called ISO 646-1991. Likewise, the encoding method for JIS-Roman encoding is found in the document called JIS X 0201-1976. The ASCII/JIS-Roman encoding method specifies that seven bits be used, which in turn allows for 128 uniquely encoded characters.

The extended ASCII character set encoding defined by ISO 8859 is a fixed-width encoding method that makes use of eight bits, which in turn allows for 256 uniquely encoded characters. The first 128 character positions are reserved for the ASCII character set and control characters, but the additional 128 character positions can vary. Exactly which characters are encoded in the second 128 character positions is specified in each of the ten parts. However, not all of the second 128 encoded positions are used by every part of ISO 8859.

JIS is a modal encoding. Characters are encoded using one and two byte sequences, with special escape sequences for switching between modes. Escape sequences are used to switch between different character sets. Thus, in modal encoding, special values in the encoding, the escape sequences, are used to change the state. The bytes "ESC $ B" indicate that, from then on, bytes are to be interpreted as position codes for JIS X 0208-1990, rather than ASCII. This effect is cancelled using the bytes "ESC ( B", which means "switch from whatever the current state is to ASCII". To switch to JIS X 0212-1990, the escape sequence is "ESC $ ( D".

The following are the escape sequences for various one- and two-byte character sets:

| One-byte Character Set | Escape Sequence |
|---|---|
| ASCII | <ESC> ( B |
| Half-width katakana | <ESC> ( I |
| JIS X 0201-1976 Roman | <ESC> ( J |
| Two-byte Character Set | Escape Sequence |
| JIS C 6226-1978 | <ESC> $ @ |
| JIS X 0208-1983 | <ESC> $ B |
| JIS X 0208-1990 | <ESC> $ B |
| JIS X 0212-1990 | <ESC> $ ( D |

The escape sequences designate a change in modes (character sets), hence the term "modal encoding".

Shift-JIS is a non-modal encoding method now used on most MS-DOS/Windows PCs. Shift-JIS was originally developed by Microsoft Corporation. Instead of using escape sequences to signal a change in character sets, Shift-JIS encoding determines which character set to use by checking the position code. If the value is in the range 2lh to 7Eh (33 to 126 decimal), the ASCII/JIS-Roman character set is used. Likewise, all half-width katakana characters have values in the range A1h to DFh (161 to 223 decimal). A position code that falls in the range 8lh to 9Fh or Eoh to EFh is taken to be the first byte (or lead byte) of a double-byte character. The following byte is then treated as the second-byte, or trailing byte of the character. There is never a need to explicitly signal a character set change in Shift-JIS encoding - the character set is determined solely by the position code. Shift-JIS is thus a non-modal encoding scheme. However, since the coding space is limited, Shift-JIS encoding does not allow the use of characters defined in JIS X 0212-1990 (the 5,801 kanji that are less frequently used). This problem does not exist with JIS encoding, since new character sets can be added simply by defining a new escape sequence.

EUC stands for "Extended UNIX Code" and is an encoding system from ISO 2022-1993 that is designed to handle large or multiple character sets. It is primarily used on UNIX systems, such as Sun's Solaris. EUC consists of four codes sets, numbered 0 through 3. The only code set that is more or less fixed by definition is code set 0, which is specified to contain ASCII or a locale's equivalent (such as JIS X 0201-1976 for Japanese). EUC supports two encodings: a double-byte encoding (known as the EUC complete two-byte format), and a variable-width encoding (known as the EUC packed format). EUC packed format is a non-modal encoding method in which the code set is determined by use by checking the position code. EUC complete two-byte format is a fixed-width encoding in which all code sets, including code set 0 are represented by two bytes.

To enable multi-language simple text printing, it is essential that the PDL Guesser determine the encoding method of a text print job. By doing this the PDL Guesser can be used to determine if text print jobs written in different languages can be printed. The PDL Guesser is responsible for detecting modal, non-modal, and fixed-width encoding methods.

There may be several different encoding methods that support a particular language.

The following encoding methods are supported listed with the electronic character sets they encode.

| ENCODING METHOD | SUPPORTED ELECTRONIC CHARACTER SET STANDARDS |
|---|---|
| 7 Bit ASCII (ISO-646-1991) | ISO-646-1991 |
| 8 Bit ASCII (ISO-8859) | ISO-8859-1 ISO-8859-2 ISO-8859-3 ISO-8859-4 ISO-8859-5 ISO-8859-6 ISO-8859-7 ISO-8859-8 ISO-8859-9 ISO-8859-10 |
| JIS ROMAN (JIS X 0201-1976) | JIS ROMAN (JIS X 02011976) |
| 7 Bit ISO 2022 (JIS) | ISO-646-1991 JIS X 0201-1976 (JIS ROMAN) JIS X 0201-1976 (Half width katakana) JIS C 6226-1978 JIS X 0208-1983 JIS X 0212-1990 JIS X 0208-1990 |
| EUC Packed Format (ISO 2022-1993) | ISO-646-1991 JIS X 0201-1976 (JIS ROMAN) JIS X 0201-1976 (Half width katakana) JIS X 0212-1990 JIS X 0208-1990 |
| EUC Complete Two-Byte Format (ISO 2022-1993) | ISO-646-1991 JIS X 0201-1976 (JIS ROMAN) JIS X 0201-1976 (Half width katakana) |
| | JIS X 0212-1990 JIS X 0208-1990 |
| Shift-JIS | ISO-646-1991 JIS X 0201-1976 (JIS ROMAN) JIS X 0201-1976 (Half width katakana) JIS X 0208-1990 |

A text document which is created in a particular language must use a character set which supports the desired language. The characters of the character set which supports the desired language will be encoded in the text document using one of the available encoding methods. The only way that the text document written in the desired language can be printed is if the PDL guesser can determine it is a text document by identifying the encoding method for the characters. Referring to Figure 2, the print job stream is communicated to the PDL analyzing units 702. The analyzing unit or units which are responsible for determining if the stream is encoded text shall attempt to determine for each character if the position code falls into the encoding range of a supported encoding method.

If all characters in the stream fall into the encoding range of one of the supported encoding methods then the analyzing unit has determined that the sample is from a text document written in a language supported by one of the character sets which can be encoded by that encoding and sends a Simple Text format signal to the arbiter 704. If not all characters in the stream fall into the encoding range of one of the supported encoding methods then the analyzing unit or units will send an unknown format signal to the arbiter 704. Each of the information signals generated by the PDL analyzing units 702 within one PDL guesser 700 are outputted and the information signals are transmitted to the arbiter 704 of that PDL guesser. Each of the signals are then arbitrated, conjunctively, with the arbiter 204. The arbiter, in the preferred embodiment, operates by a set of rules, which may be hard-coded or may be programmed dynamically through use of a configuration file. Preferably, the configuration file assumes a hierarchical form.

Since the configuration file is programmable, the arbiter can be altered readily in conformance with the needs of various clients. In one example, rules are dynamically reconfigured through use of the server rules line or the client server lines. A client user or a server administrator can display the current rules on an appropriate display and selected rules can be deleted and replaced with other desired rules. Through use of the rules inputs, the client user or server administrator may set printing priorities and/or precedents. With this condition in mind, the server administrator may want to add a rule that permits a fault message to be transmitted to any particular client that may send a print job to the arrangement 70.

Through the use of over-ride signals, either the client user or the server administrator can direct arbiter operation to correspond with various existing conditions of the printing system.

As mentioned above, one of the PDL analyzing units may include a binary filter which collects statistics regarding the occurrence of binary characters in the print job stream. This prevents a data stream from fooling the arrangement 200 into reporting that a print job is written in one PDL when it happens to include an executable image that simply contains valid PDL operators or keywords. The arbiter 204 uses the binary filter's knowledge of the print job stream to prevent it from reporting that PDL when the print job stream contains fewer than a selected percentage of binary characters.

After the information signals have been arbitrated with the arbiter 204, the resulting arbitrated signal, indicating the PDL of the print job stream, is transmitted to the spooler 410.

One feature of the disclosed embodiment is efficient PDL analyzing of a print job stream. That is, a print job stream is scanned simultaneously by a plurality of PDL analyzing units, and each of the units is able to provide information simultaneously about the PDL type embodied by the stream. Moreover, the PDL analyzing units can provide information regarding the presence of a PDL version type in the print job stream.

Another feature of the disclosed embodiment is flexibility and extendibility. PDL Analyzing units for additional encoding methods to support additional character sets which express additional languages can be added and deleted as desired in a modular fashion. To accommodate for such addition(s) or deletion(s) an arbiter, which is used to filter the outputs of the PDL analyzing units, can be provided with a programmable, configuration file.

Yet another feature of the disclosed embodiment is tunability of the arbiter. The arbiter communicates with various inputs, which inputs can be used to program the arbiter dynamically. Moreover, the inputs permit the arbiter to be over-ridden by either a client user or a server administrator.

## Claims

1. A printing system that distributes documents among a plurality of printers in a networked printing system comprising:
a spooler (410) that receives documents and generates a print job from each document,
a page description language guesser (700) having a plurality of page description language analyzing units (702-1...702-N) on said spooler, said plurality of page description language analyzing units for sampling a data sample from said document, said data sample including character sets of the text in the data sample of said page description language in which said print job is written, wherein said plurality of said page description language analyzing units analyze said data sample for said character sets to determine the encoding method of said page description language, and
a supervisor (420) for forwarding said print job of said document from said spooler (410) to said one of said plurality of printers (422) for printing said document which can print said page description language of said print job of said document.

2. A printing system according to claim 1, wherein each of said page description language analyzing units (702-1...702-N) outputs a signal regarding said encoding method of said text of said data sample from said document, and further comprising,
an arbiter (704) for receiving and processing said signals from said plurality of page description language analyzing units, said arbiter determining the page description language of said document.

3. A printing system according to claim 2, further comprising a binary filter for providing said arbiter (704) with an indication of a percentage of binary characters in said print job to prevent erroneously indicating that said print job is written predominantly in one page description language when it is written predominantly in another page description language.

4. A method for distributing document printing among a plurality of printers in a networked printing system comprising:
receiving documents at the networked printing system,
generating a print job from each document by a spooler (420),
sampling a data sample from said document, analyzing said data sample by a page description language guesser (700) having a plurality of page description language analyzing units (702-1...702-N) for character sets of text of said page description language to determine the encoding method and from said encoding method determining said page description language, and
forwarding said print job of said document to said one of said plurality of printers (422) for printing said document which can print said page description language of said print job of said document by a supervisor.

5. A method according to claim 4, wherein the step of analyzing said data sample includes
receiving and processing signals from said plurality of page description language analyzing units by an arbiter (704), said arbiter determining the page description language of said document and setting an attribute for said document to indicate the page description language for said print job of said document.

6. A method according to claim 5, wherein the step of determining the page description language includes providing said arbiter (704) with an indication of a percentage of binary characters in said print job to prevent erroneously indicating that said print job is written predominantly in one page description language when it is written predominantly in another page description language.
